Europäisches Patentamt

European Patent Office

Office européen des brevets

(11) Publication number: **0 245 957**
A2

# (12) EUROPEAN PATENT APPLICATION

(21) Application number: 87303179.3

(22) Date of filing: 10.04.87

(51) Int. Cl.³: **B 63 B 35/02**
B 63 G 8/42, G 01 V 3/15

(30) Priority: 10.04.86 GB 8608742

(43) Date of publication of application:
19.11.87 Bulletin 87/47

(84) Designated Contracting States:
DE FR GB NL

(71) Applicant: Seismograph Service (England) Limited
Holwood Westerham Road
Keston Kent, BR2 6HD(GB)

(72) Inventor: Lugg, Rex c/o Seismograph Service (England)
Ltd.
Holwood Westerham Road
Keston Kent BR2 6HD(GB)

(72) Inventor: Breugelmans, Jacobus
Langenfeld Hillcrest Road
Biggin Hill Kent(GB)

(74) Representative: Lynd, Michael Arthur et al,
MARKS & CLERK 57 Lincoln's Inn Fields
London WC2A 3LS(GB)

(54) Marine seismic survey vessel.

(57) A marine seismic survey vessel includes at least two
rotatable first drums arranged each to receive a towed receiver array and a rotatable second drum arranged to receive
a towed source array, each of said first and second drums
being mounted in or on the survey vessel, and said second
drum being disposed in the vessel intermediate said first
drums. Preferably each rotatable drum is disposed to extend
through the deck of a said vessel. It is preferred that each
drum, and driving gear therefor, be mounted on a first deck of
the vessel with the towed array thereof being arranged to pay
out through a second deck of the vessel. Preferably each
rotatable drum is arranged to be skewable about an axis
normal to the axis of revolution of the drum.

EP 0 245 957 A2

Croydon Printing Company Ltd.

0245957

&C FOLIO: 230PS1555          WANGDOC: 0693P

## MARINE SEISMIC SURVEY VESSEL

This invention relates to a marine seismic survey
vessel.

Known marine seismic survey vessels usually carry a
plurality of towed arrays, the towed arrays being stored
on respective rotatable drums which allow the arrays to
be paid out, to be towed behind the vessel, and to be
paid in for storage.

Such drums have conventionally been mounted, within
the vessel, on one of the decks, with all the ancillary
driving equipment and paying out gear being disposed,
likewise, on the same deck level.  The disposition of
the drums has also, conventionally, been such that the
receiver array (streamer cable) drums have been disposed
generally about the centre line for deployment over the
stern with the source arrays being normally streamed
from the vessels quarters on either side of the receiver
array drums.

The prior art construction has the disadvantage that it is effectively impossible to pay out or recover multiple receiver arrays at the same time, as these are both paid out along the centre axis and, consequently, may interfere with one another. Moreover, operations involving use of the drums and towed arrays are limited due to the space constraint imposed by the deck size. More particularly, it is difficult to work on and maintain the towed arrays, particularly if damaged.

According to the present invention there is provided a marine seismic survey vessel which includes at least two rotatable first drums arranged each to receive a towed receiver array and a rotatable second drum arranged to receive a towed source array, each of said first and second drums being mounted in or on the survey vessel, and said second drum being disposed in the vessel intermediate said first drums.

Preferably a plurality of said first drums and said second drums is employed, each said second drum being disposed closer to the longitudinal centre line of the vessel than each said first drum.

Preferably each rotatable drum is arranged to be slewable about an axis normal to the axis of revolution of the drum.

Preferably each rotatable drum is disposed to extend through a deck of said vessel. It is a preferred feature that each drum, and driving gear therefor, be mounted on a first deck with the towed array being arranged to pay out through a second deck.

An embodiment of the marine seismic survey vessel according to the present invention will now be described, by way of example only, with reference to the accompanying drawings, in which:

Figure 1 is a cross-sectional view through the stern of a marine survey vessel, along the longitudinal centre line thereof;

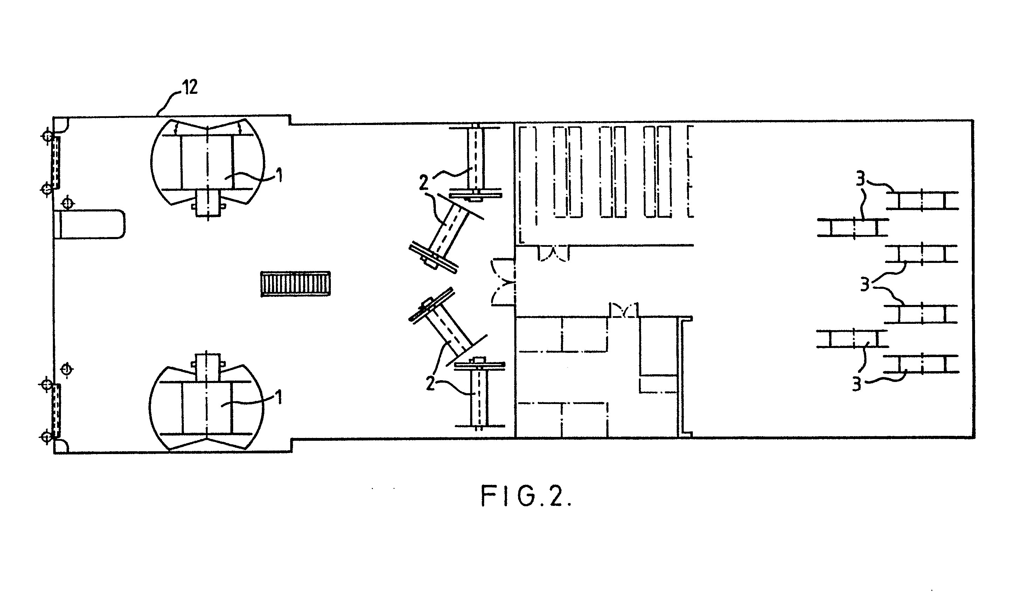

Figure 2 is a cross-sectional plan view taken along the line 2-2' of Figure 1;

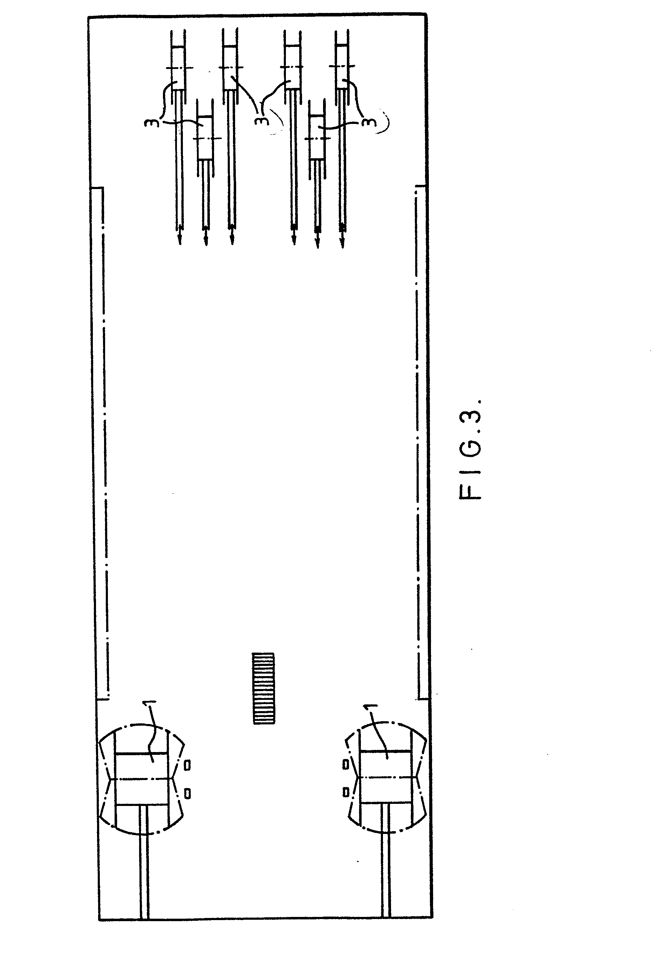

Figure 3 is a cross-sectional plan view taken in the direction 3-3' of Figure 1.

With reference to the Drawings, a marine survey vessel 10 is shown. The vessel 10 is provided with a plurality of rotatable drums 1,3 disposed aft. Two receiver array drums 1 are provided out at the ship's sides. The drums 1 are mounted on an upper deck 12 of the vessel 10, with driving gear (not shown) being mounted on this upper deck. The drums 1 are arranged, however, to extend between the upper deck and a lower, main streaming deck 14.

Six source array drums 3 are also provided, the drums 3 being arranged on either side of the longitudinal centre line of the vessel 10, and inboard of the receiver array drums 1.

The source array drums 3 also have drive gear (not shown) mounted on the upper deck 12, the drums 3 extending between the upper deck 12 and main streaming deck 14.

The mounting of the drums 1,3 between decks allows larger diameter drums to be employed, the drum flange diameter being able to be increased by up to twice the normal diameter thereby to give the benefits of much narrower drums, allowing deck space saving and a larger barrel diameter which in turn will tend to lessen bend radius loads applied to the towed arrays 4,5.

Towed source arrays 5 and towed receiver arrays 4 are arranged to be deployed through the main streaming deck 14.

This arrangement allows the functions carried out on the upper deck 12 and the main streaming deck 14 to be

divided, so that the main streaming deck 14 is clear of the drive and maintenance gear and is thus clear for handling and deployment of the towed arrays, while the upper deck 12 is available for repair and servicing of the towed array cables, in particular the receiver arrays 4, which are highly delicate.

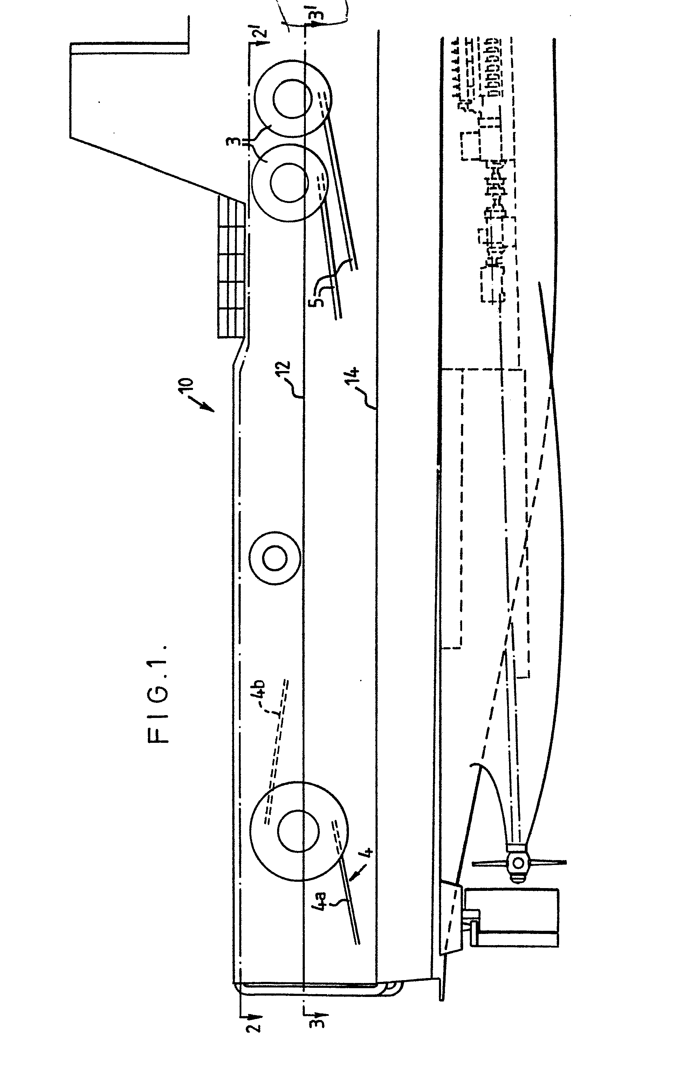

If it is desired to repair a section of a towed receiver array cable 4, the cable 4 (4a) is disconnected and held by a separate tow (not shown), with the unserviceable section being wound off the top of the drum (as shown in phantom lines labelled 4b in Figure 1) onto the upper deck, disconnected and replaced with a spare section from a storage drum 2. The cable (4a) is then reconnected and deployed or recovery continued.

With the source array drums 3 and their ancillary equipment being mounted on upper deck 12, the absence of driving gear on the main streaming deck 14 leaves the deck 14 clear for handling repair and maintenance of the source arrays and corresponding umbilical cables.

It is to be understood that although the source arrays are relatively short and can therefore be streamed generally centrally of the vessel, the receiver arrays are frequently of extreme length. By locating the drums for respective receiver arrays in spaced relationship to each other, and with drums for the source arrays located intermediate of the receiver drums, the risk of respective receiver arrays becoming tangled during deployment, use or recovery of the arrays is significantly lessened.  In a preferred embodiment two reciever array drums are provided, located respectively to port and to starboard of the vessel.

The receiver array drums 1 are also mounted so as to be skewable. i.e. steerable through a limited angular range α, -α to improve control of the deployment and recovery of the streamer cables, particularly in rough seas where the angle of deployment of the cables over the stern may change rapidly.  The azimuthal angle of the drums is preferably controlled in accordance with the angle of deployment of the arrays at any given time.

It is to be understood that the invention may be performed otherwise than as has been particularly described; the present invention includes within its scope all modifications and changes which would be apparent to one skilled in the art.

## CLAIMS

1  A marine seismic survey vessel which includes at least two rotatable first drums arranged to receive a towed receiver array and a rotatable second drum arranged to receive a towed source array, each of said first and second drums being mounted in or on the survey vessel, and wherein a said second drum is disposed in the vessel intermediate said first drums.

2  A seismic survey vessel according to Claim 1, which include two rotatable said first drums arranged respectively to port and to starboard of the vessel and which includes six said second drums each disposed inboard of said first drums.

3. A marine seismic survey vessel, wherein each rotatable drum is disposed to extend through a deck of said vessel.

4. A marine seismic survey vessel according to Claim 3 wherein each drum, and driving gear therefor, is mounted on a first deck of the vessel, with the towed array thereof being arranged to pay out through a second deck of the vessel.

5. A marine seismic survey vessel according to Claim 1 wherein each rotatable drum is arranged to be skewable about an axis normal to the axis of revolution of the drum.

6. A marine seismic survey vessel, substantially as herein before described with reference to the accompanying drawings.

7. The features hereinbefore disclosed, or their equivalents, in any novel selection.

## FIG.1.

FIG.2.

FIG.3.